# EUROPEAN PATENT APPLICATION

(11) **EP 4 201 714 A1**
(43) Date of publication of application: **28.06.2023**
(21) Application number: 22215341.3
(22) Date of filing: 21.12.2022
(51) Int. Cl.: B60D 1/06, B60R 9/10

(54) **SECURING DEVICE FOR HITCH BALL RECEIVER**

(30) Priority: 24.12.2021 TW 110215429 U
(71) Applicant: King Rack Industrial Co., Ltd., Taichung City (TW)
(72) Inventor: Wang, Chiu Kuei, Taichung City (TW)
(74) Representative: Cabinet Chaillot

(57) **Abstract**

A securing device of a hitch ball receiver includes a ball hitch connected to a vehicle, and a hitch ball receiver connected to a bicycle rack. The bitch ball receiver includes a tube which includes a passage defined through the open bottom of the tube, and a room is formed in the tube and communicates with the passage. The ball of the ball hitch is accommodated in the room via the passage. A recess formed in the wall of the opening bottom of the tube and the protrusion is engaged with the recess. Two bolts threadedly extend through the tube at an angle relative to the axis of the tube. The two bolts contact against the ball in the room. The tube is lowered toward the bar by rotating the bolts to engage the protrusion with the recess.

## Description

### BACKGROUND OF THE INVENTION

### 1. Fields of the invention

The present invention relates to a securing device, and more particularly, to a securing device of a hitch ball receiver.

### 2. Descriptions of Related Art

The conventional way to attach a bicycle rack to a car is to attach the bicycle rack to a hitch ball at the rear end of a car. In order to secure the connection between the hitch ball and the bicycle rack, the bicycle rack is connected to a receiver which has catchers at the underside thereof, and the ball hitch has hooks which are used to hook the lugs to combine the bicycle rack and the hitch ball.

However, there are different types of securing devices used in the market, and some of the securing devices may not properly connected to the hitch ball. The securing device may also interfere with the vehicle parts when in use. Once the securing device of the receiver is not properly connected to the hitch ball, the bicycle rack shakes or even is separated during transportation.

The present invention intends to provide a securing device of a hitch ball receiver to eliminate the shortcomings mentioned above.

### SUMMARY OF THE INVENTION

The present invention relates to a securing device of a hitch ball receiver, and comprises a ball hitch that includes a ball formed to a bar which is connected to a vehicle. A protrusion protrudes from the bar. A hitch ball receiver is connected to a bicycle rack, and removably mounted to the ball. The bitch ball receiver includes a tube which includes a passage defined through the open bottom of the tube. A room is formed in the tube and communicates with the passage. The ball is accommodated in the room via the passage. A recess is formed in the wall of the opening bottom of the tube and the protrusion is engaged with the recess. Two bolts threadedly extend through the tube at an angle relative to the axis of the tube. The two bolts contact against the ball in the room. The tube is lowered toward the bar by rotating the bolts to engage the protrusion with the recess.

Preferably, the diameter of the bitch ball receiver is greater than that of the ball. The recess includes concaved and curved face which is matched with the protrusion.

Preferably, each of the bolts includes a wing or an enlarged portion formed to the head thereof such that the users can easily rotate the bolts.

The primary object of the present invention is to provide a securing device of a hitch ball receiver which is easily operated by holding and rotating the wing or enlarged portion of each bolt.

Another object of the present invention is to provide a securing device of a hitch ball receiver wherein the use of the two bolts prevent from being interfered with other parts.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the ball hitch and the hitch ball receiver of the present invention;
Fig. 2 is a partially cross sectional view to show that the ball of the ball hitch is connected with the hitch ball receiver of the present invention;
Fig. 3 shows that the ball of the ball hitch is to be moved into the room of the tube of the hitch ball receiver of the present invention;
Fig. 4 shows that the ball of the ball hitch is moved into the room of the tube of the hitch ball receiver of the present invention, and the two bolts contact the ball;
Fig. 5 shows that the hitch ball receiver is connected to the bicycle rack by bolts and nuts.
Fig. 6 shows that the hitch ball receiver is welded to the bicycle rack;
Fig. 7 shows the bolt includes a wing formed to its head, and
Fig. 8 shows the bolt includes an enlarged portion formed to its head.

### DETAILED DESCRIPTION OF THE PREFERRED EMBODIMENT

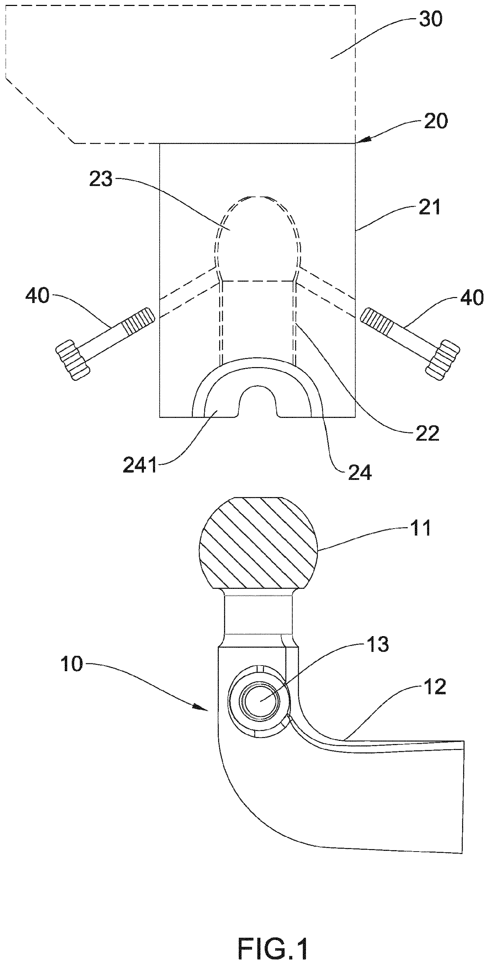

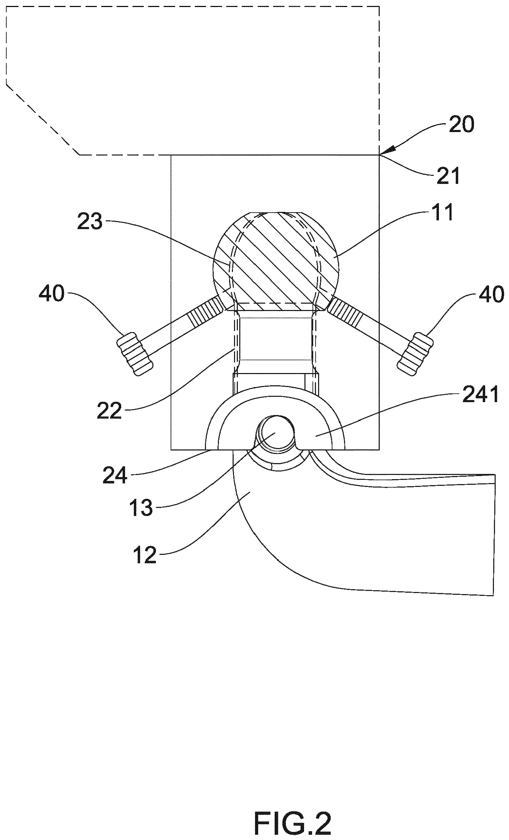

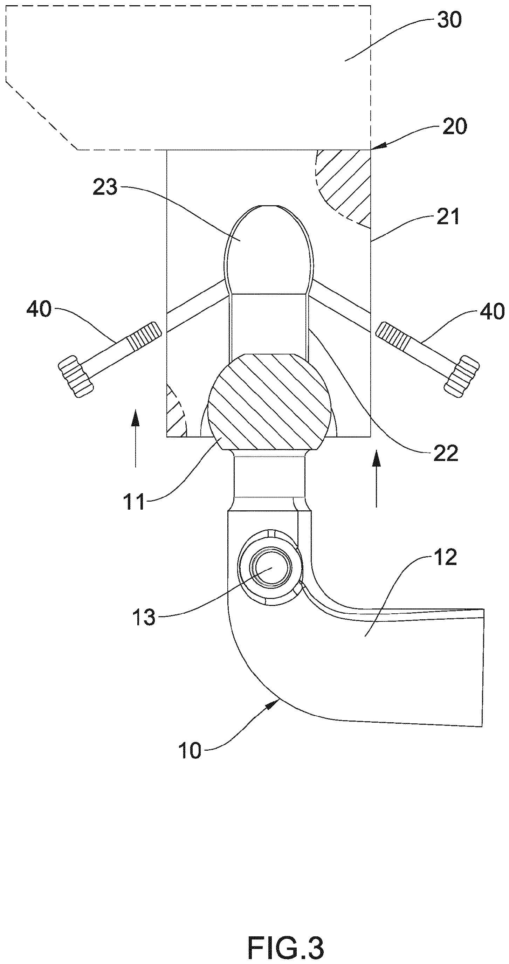

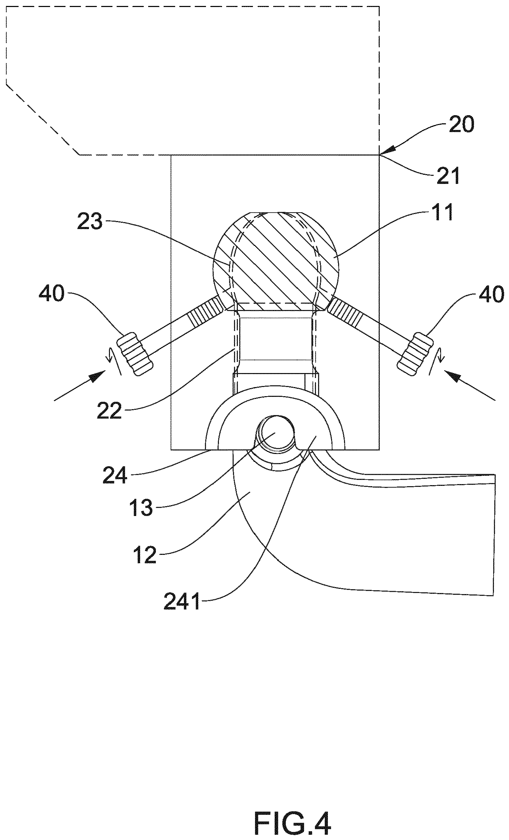

Referring to Figs. 1 to 4, the securing device of a hitch ball receiver 20 comprises a ball hitch 10 which is connected to a vehicle, and includes a ball 11 formed to an L-shaped bar 12. The bar 12 is connected to the vehicle, and a protrusion 13 protrudes from the bar 12.

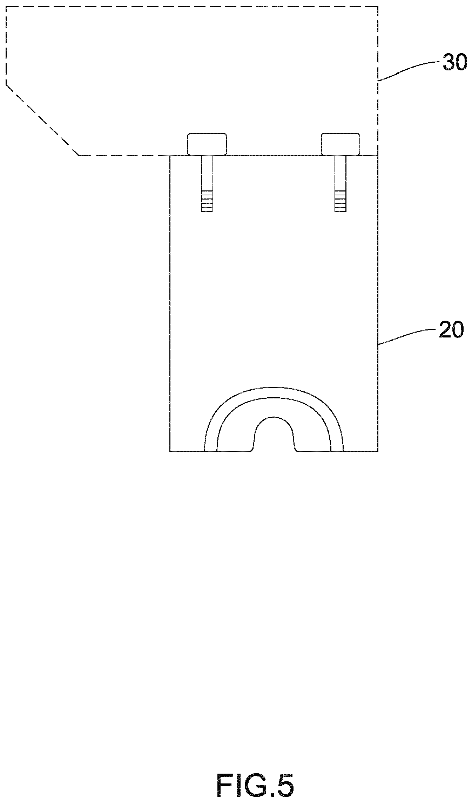

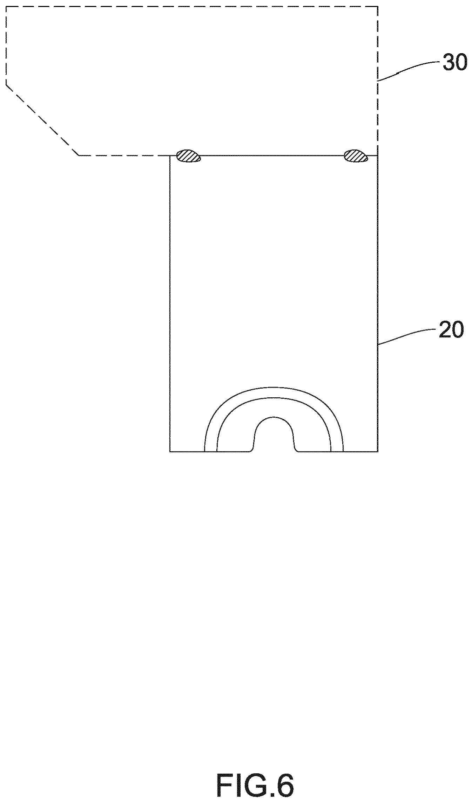

A hitch ball receiver 20 is connected to a bicycle rack 30, and the bitch ball receiver 20 is removably mounted to the ball 11. The hitch ball receiver 20 is connected to the bicycle rack 30 by bolts and nuts as shown in Fig. 5, or the hitch ball receiver 20 is adapted to be welded to the bicycle rack 30 as shown in Fig. 6.

The bitch ball receiver 20 includes a tube 21 which includes a passage 22 defined through its open bottom of the tube 21. A room 23 is formed in the tube 21 and communicates with the passage 22. The ball 11 is accommodated in the room 23 via the passage 22. A recess 24 is formed in the wall of the opening bottom of the tube 21 and the protrusion 13 is engaged with the recess 24.

Two bolts 40 threadedly extend through the tube 21 from outside of the tube 21 at an angle relative to the axis of the tube 21. The two bolts 40 contact against the ball 11 in the room 23. The tube 21 is lowered toward the bar 12 by rotating the bolts 40 to engage the protrusion 13 with the recess 24. It is noted that the diameter of the bitch ball receiver 20 is greater than that of the ball 11, the recess 24 includes concaved and curved face 241 which is matched with the protrusion 13 to enforce the stability of the engagement between the tube 21 and the ball 11.

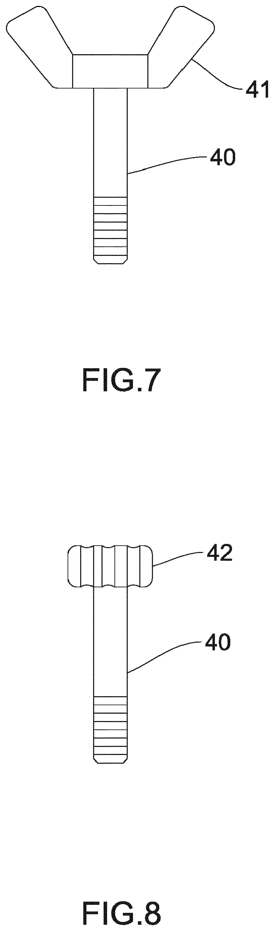

In order to allow the users to easily rotate the bolts 40, each of the bolts 40 includes a wing 41 formed to a head thereof as shown in Fig. 7. Alternatively, as shown in Fig. 8, each of the bolts 40 includes an enlarged portion 42 formed to its head thereof.

The operation to the bolts 40 are easy and do not need any tool. After the ball 11 is accommodated in the room 23, the users rotate the bolts 40 to further match concaved and curved face 241 of the recess 24 with the protrusion 13 so that the bicycle rack 30 can be carried without shanking between the tube 21 and the ball 11.

While we have shown and described the embodiment in accordance with the present invention, it should be clear to those skilled in the art that further embodiments may be made without departing from the scope of the present invention.

## Claims

1. A securing device of a hitch ball receiver, comprising:
a ball hitch 10 including a ball 11 formed to a bar 12, the bar 12 adapted to be connected to a vehicle, a protrusion 13 protruding from the bar 12;
a hitch ball receiver 20 adapted to be connected to a bicycle rack 30, the bitch ball receiver removably mounted to the ball 11 and including a tube 21 which includes a passage 22 defined through an open bottom of the tube 21, a room 23 formed in the tube 21 and communicating with the passage 22, the ball 11 accommodated in the room 23 via the passage 22, a recess 24 formed in a wall of the opening bottom of the tube 21 and the protrusion 13 engaged with the recess 24, and
two bolts 40 threadedly extending through the tube 21 at an angle relative to an axis of the tube 21, the two bolts 40 contacting against the ball 11 in the room 23, the tube 21 being lowered toward the bar 12 by rotating the bolts 40 to engage the protrusion 13 with the recess 24.

2. The securing device of a hitch ball receiver as claimed in claim 1, wherein a diameter of the hitch ball receiver 20 is greater than that of the ball 11, the recess 24 includes concaved and curved face 241 which is matched with the protrusion 13.

3. The securing device of a hitch ball receiver as claimed in claim 1, wherein each of the bolts 40 includes a wing 41 formed to a head thereof.

4. The securing device of a hitch ball receiver as claimed in claim 1, wherein each of the bolts 40 includes an enlarged portion 42 formed to a head thereof.

5. The securing device of a hitch ball receiver as claimed in claim 1, wherein the hitch ball receiver 20 is adapted to be connected to the bicycle rack 30 by bolts 40 and nuts.

6. The securing device of a hitch ball receiver as claimed in claim 1, wherein the hitch ball receiver 20 is adapted to be welded to the bicycle rack 30.
